# EUROPEAN PATENT APPLICATION

(11) **EP 4 656 931 A2**
(43) Date of publication of application: **03.12.2025**
(21) Application number: 25209833.0
(22) Date of filing: 14.01.2022
(51) Int. Cl.: F17C 3/08

(54) **CONTAINER FOR CRYOGENIC STORAGE AND SHIPPING**

(30) Priority: 15.01.2021 US 202163138085 P
(62) Divisional of application: 22702582.2
(71) Applicant: Azenta US, Inc., Springfield, MO 65803 (US)
(72) Inventor: Edwards, Gilmer, Canton, Georgia, 30114 (US)
(74) Representative: Hoffmann Eitle

(57) **Abstract**

A unique cryogenic storage container may have a dual neck configuration with an inner neck and an outer neck. A unique cryogenic storage container may also have a data acquisition assembly comprising a temperature sensor connected to an inner tank of the cryogenic storage container at an inner tank port located in an inner tank wall of the inner tank. A unique cryogenic storage container may also have a lid sealing assembly with a sealing member through which an insulation member of the lid sealing assembly is at least partially disposed and a passage through the lid sealing assembly having a pressure relief valve.

## Description

### CROSS REFERENCES AND PRIORITIES

This application claims priority to United States Provisional Application No. 63/138,085 filed on 15 January 2021 the teachings of which are incorporated by reference herein in their entirety.

### BACKGROUND

Cryogenic storage dewars - also known as cryogenic storage containers - are thermally insulated containers designed to temporarily store a cryogenic liquid and frozen contents that must be kept at or near cryogenic temperatures during storage. By way of example, but not limitation, certain life science products such as research samples and other biologicals must be kept at cryogenic temperatures to maintain post-thaw viability. When the products are needed for use, a portable dewar/container may accommodate transport and delivery of the products while maintaining the desired cryogenic temperature.

Several issues arise with keeping products at cryogenic temperatures during transport and delivery. One known problem is ensuring the cryogenic temperature within the dewar/container's storage space during the entirety of the transport and delivery process. As it is often difficult if not impossible to introduce additional cryogen to the dewar/container during transport, reducing and eliminating temperature increases in the storage space during transport becomes critical.

Another known problem is temperature monitoring. Typical dewars/containers designed for transport and delivery include a temperature sensor placed in the lid of the dewar/container so that the critical electrical components of the sensor are not exposed to cryogens within the container. However, locating the sensor in the lid of the dewar/container creates several problems. Notably, locating the sensor in the lid of the dewar/container does not provide the user with an accurate reading of the temperature within the storage space where products are located. Additionally, as the lid may be removed before, during, or after transport, locating the sensor in the lid allows it to be separated from the dewar/container resulting in misleading temperature information and gaps regarding temperature information over time.

Yet another known problem relates to maintaining cryogen levels in the dewar/container during transport. Dewars/containers require that the cryogen space be vented to atmosphere to prevent over pressurization. Due to the design of the venting mechanism, known dewars/containers designed for transportation must be kept perfectly upright during transport to prevent the cryogen from leaking out through the venting mechanism. When cryogen leaks occur the temperature in the dewar/container's storage space may increase resulting in spoliation of the products therein. However, it can be challenging to maintain the dewar/container in a perfectly upright position during the entirety of the transport cycle.

Others have attempted to solve the problems associated with cryogen leakage. One such attempt is disclosed in United States Patent Application Publication No. 2019/0211971 A1. The device disclosed in 2019/0211971 A1 includes a storage system having an enclosure and a cavity. The storage system has a dewar that is positioned within the cavity of the enclosure. By being able to freely rotate within the enclosure and by having passive stabilization, the dewar remains upright regardless of the orientation of the enclosure to prevent spillage.

The device disclosed in 2019/0211971 A1 relies upon a complicated external enclosure structure and stabilization mechanisms to maintain the dewar in an upright position and therefore prevent cryogen leakage. Such a mechanism is difficult to manufacture and operate.

There exists, therefore, the need for an improved cryogenic dewar/storage container capable of reducing temperature increases during transportation. The need also exists for an improved cryogenic dewar/storage container capable of more accurately and continuously monitoring temperature in the cryogenic storage chamber of the dewar/container. Finally, the need exists for an improved cryogenic dewar/storage container which reduces the likelihood of cryogen leakage during transport without having to maintain the dewar/container in a perfectly upright position during transport.

### SUMMARY

Described herein is a cryogenic storage container. Some embodiments of the cryogenic storage container may comprise an inner tank, an outer tank, an inner neck, an outer neck, a ring, and a lid assembly.

In such embodiments, the inner tank may have an inner tank first end and an inner tank second end opposite the inner tank first end. The inner tank may also have an inner tank diameter and an inner tank passage to a cryogenic storage chamber.

The outer tank may have an outer tank first end and an outer tank second end opposite the outer tank first end. The outer tank may also have an outer tank diameter and an outer tank passage.

The inner neck may have an inner neck first end and an inner neck second end opposite the inner neck first end. The inner neck may also have an inner neck inner surface and an inner neck outer surface.

The outer neck may have an outer neck first end and an outer neck second end opposite the outer neck first end. The outer neck may also have an outer neck inner surface and an outer neck outer surface.

The ring may have a ring inner surface and a ring outer surface. The ring inner surface may be connected to the inner neck outer surface at the inner neck second end. The ring outer surface may be connected to the outer neck inner surface at the outer neck second end.

The lid assembly may comprise a cover having a cover top surface and a cover bottom surface. The lid assembly may also comprise an insulation member attached to and extending from the cover bottom surface.

The outer neck outer surface or the outer neck inner surface at the outer neck first end may be connected to the outer tank at the outer tank passage. Similarly, the outer neck outer surface or the outer neck inner surface at the outer neck second end may be connected to the inner tank at the inner tank passage.

The outer neck and the inner neck may be configured such that a gap exists between the outer neck inner surface and the inner neck outer surface. Said gap may be at least 2 mm in width.

In some embodiments, the inner tank passage may comprise a first flange extending from the inner tank. The outer neck outer surface or the outer neck inner surface at the outer neck second end may be connected to the inner tank at the inner tank passage by bonding the outer neck outer surface or the outer neck inner surface at the outer neck second end to the first flange.

In certain embodiments, the outer tank passage may comprise a second flange extending from the outer tank. The outer neck outer surface or the outer neck inner surface at the outer neck first end may be connected to the outer tank at the outer tank passage by bonding the outer neck outer surface or the outer neck inner surface at the outer neck first end to the second flange.

In some embodiments, the inner neck may be made of a first fiberglass material. The first fiberglass material may be a Garolite G-10/FR4 fiberglass-epoxy laminate material. Similarly, in certain embodiments, the outer neck may be made of a second fiberglass material. The second fiberglass material may be a Garolite G-10/FR4 fiberglass-epoxy laminate material. In some embodiments, the ring may be made of an aluminum material.

In certain embodiments, at least a portion of the inner tank may be surrounded by a first hydrophobic absorbent material. The first hydrophobic absorbent material may be Cryogel^{®}. In some such embodiments, at least a portion of the outer neck may be surrounded by the first hydrophobic absorbent material.

In some embodiments, the outer neck may have an outer neck outside diameter. The outer neck outside diameter may be slightly less than the inner tank diameter.

Also described herein is a cryogenic storage container comprising an inner tank, an outer tank, and a data acquisition assembly. The inner tank may comprise at least one inner tank wall. The at least one inner tank wall may at least partially surround a cryogenic storage chamber. The inner tank wall may comprise at least one inner tank port. The outer tank may comprise at least one outer tank wall. The outer tank wall may comprise at least one outer tank port. The data acquisition assembly may comprise a temperature sensor, at least one wire, and a data logging and display device.

The temperature sensor may be connected to the inner tank at the inner tank port. The data logging and display device may be located external to the outer tank. The at least one wire may electrically connect at a first end to the temperature sensor, extend through a void between the inner tank and the outer tank, through the outer tank port, and electrically connect at a second end to the data logging and display device. The at least one wire may have a wire length, a wire gauge, and a ratio between wire length and wire gauge of at least 850,000:1.

In some embodiments, the outer tank port may comprise a sealed vacuum feedthru device. The outer tank wall comprising the at least one outer tank port may be an outer tank top wall. Alternatively, the outer tank wall comprising the outer tank port may be an outer tank sidewall, and the at least one outer tank port may be located at a top end of the outer tank sidewall.

In certain embodiments, the inner tank wall comprising the at least one inner tank port may be an inner tank top wall. Alternatively, the inner tank wall comprising the at least one inner tank port may be an inner tank sidewall, and the at least one inner tank port may be located at a top end of the inner tank sidewall.

In some embodiments, the ratio between wire length and wire gauge may be selected from the group consisting of at least 900,000: 1, at least 950,000: 1, and at least 1,00,000:1.

It is further described herein a cryogenic storage container comprising an inner tank, an outer tank, a lid assembly, a neck, and a sealing member. The inner tank may comprise at least one inner tank wall having an inner tank passage to a cryogenic storage chamber disposed in the inner tank wall. The outer tank may comprise at least one outer tank wall having an outer tank passage disposed in the outer tank wall. The lid assembly may comprise a cover having a cover top surface and a cover bottom surface, an insulation member attached to and extending from the cover bottom surface, a passage extending through the insulation member and the cover, and a pressure relief valve attached at a passage first end external to the cover top surface. The neck may have a neck inner surface. The sealing member may have a sealing member perimeter surface and a sealing member inner surface.

The neck may extend between the inner tank passage and the outer tank passage. The insulation member may be configured to be at least partially disposed within the neck and mated with the sealing member inner surface when the lid assembly is in a closed position.

In some embodiments, the sealing member perimeter surface may be configured to mate with the neck inner surface when the lid assembly is in the closed position. In certain embodiments, the sealing member perimeter surface may be connected to the neck inner surface. In some embodiments the sealing member inner surface may be connected to the insulation member.

In certain embodiments, the sealing member may be located within the cryogenic storage chamber. The sealing member may be connected to the inner tank wall at the inner tank passage.

In some embodiments, the sealing member may comprise a pair of opposing facing seals.

In certain embodiments, the sealing member may be made of a hydrophobic polymer material. The hydrophobic polymer material may be polytetrafluoroethylene (PTFE).

In some embodiments, the pressure relief valve may be configured to open at a pressure of at least 5 psi. In certain embodiments, the pressure relief valve may further comprise a flow meter. When present, the flow meter may be electronically connected to a data logging and display device.

### BRIEF DESCRIPTION OF FIGURES

FIG. 1 is a cross section view of a neck assembly for a cryogenic storage container.
FIG. 2 is a cross section view of a data logging system for a cryogenic storage container.
FIG. 3 is a cross section view of one embodiment of a lid sealing device for a cryogenic storage container.

### DETAILED DESCRIPTION

Disclosed herein is a cryogenic storage container. The cryogenic storage container is described below with reference to the Figures. As described herein and in the claims, the following numbers refer to the following structures as noted in the Figures.
10 refers to a cryogenic storage container.
100 refers to an inner tank.
110 refers to an inner tank first end.
120 refers to an inner tank second end.
130 refers to an inner tank diameter.
140 refers to an inner tank passage.
150 refers to a cryogenic storage chamber.
160 refers to an inner tank wall.
162 refers to an inner tank top wall.
164 refers to an inner tank sidewall.
166 refers to an inner tank bottom wall.
170 refers to an inner tank port.
180 refers to a hydrophobic absorbent material.
200 refers to an outer tank.
210 refers to an outer tank first end.
220 refers to an outer tank second end.
230 refers to an outer tank diameter.
240 refers to an outer tank passage.
250 refers to an outer tank wall.
252 refers to an outer tank top wall.
254 refers to an outer tank sidewall.
256 refers to an outer tank bottom wall.
260 refers to an outer tank port.
265 refers to a sealed vacuum feedthru device.
300 refers to an inner neck.
310 refers to an inner neck first end.
320 refers to an inner neck second end.
330 refers to an inner neck inner surface.
340 refers to an inner neck outer surface.
400 refers to an outer neck.
410 refers to an outer neck first end.
420 refers to an outer neck second end.
430 refers to an outer neck inner surface.
440 refers to an outer neck outer surface.
450 refers to an outer neck outside diameter.
500 refers to a ring.
510 refers to a ring inner surface.
520 refers to a ring outer surface.
600 refers to a lid assembly.
610 refers to a cover.
612 refers to a cover top surface.
614 refers to a cover bottom surface.
620 refers to an insulation member.
625 refers to an insulation member length.
630 refers to a passage.
635 refers to a passage first end.
640 refers to a pressure relief valve.
710 refers to a temperature sensor.
720 refers to a wire.
730 refers to a data logging and display device.
800 refers to a neck.
810 refers to a neck inner surface.
900 refers to a sealing member.

The cryogenic storage containers (10) disclosed herein include one or more of a novel neck assembly, a novel data logging system, and a novel lid sealing device. The novel neck assembly, novel data logging system, and novel lid sealing device may be present in the cryogenic storage container individually or in any combination thereof. That is to say that a cryogenic storage container may comprise any one or more of any embodiment of the novel neck assembly disclosed herein, any embodiment of the novel data logging system disclosed herein, and/or any embodiment of the novel lid sealing device disclosed herein. The novel neck assembly, novel data logging system, and novel lid sealing device are each described separately below with reference to the various Figures.

### Neck Assembly

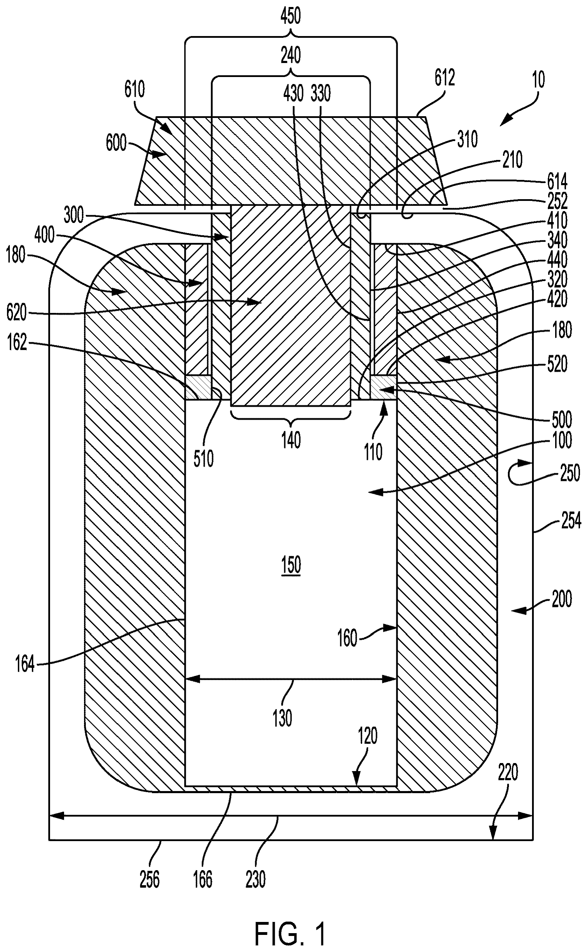

FIG. 1 shows cross-section view of one embodiment of a neck assembly for a cryogenic storage container (10). As shown in FIG. 1, the cryogenic storage container has an inner tank (100) and an outer tank (200). The neck assembly may comprise an inner neck (300), an outer neck (400), and a ring (500).

The inner tank (100) may be made of at least one inner tank wall (160). The preferred configuration of the inner tank is a closed cylinder comprising an inner tank top wall (162), an inner tank bottom wall (166), and an inner tank sidewall (164) spanning the distance between the inner tank top wall and the inner tank bottom wall. However, other configurations such as a cube, a sphere, or a spheroid are contemplated. The inner tank walls are preferably joined together in a permanent sealed fashion such as by welding or by manufacturing the inner tank walls of a single integral piece of material.

The inner tank (100) has an inner tank first end (110) proximate to the inner tank top wall (162) and an inner tank second end (120) proximate to the inner tank bottom wall (166). The inner tank first end is opposite the inner tank second end. The inner tank also has an inner tank diameter (130), which may also be referred to as an inner tank width in embodiments where a cross-sectional profile of the inner tank takes a non-circular configuration.

The inner tank (100) also has an inner tank passage (140), which allows access to the interior of the inner tank. The interior of the inner tank is where specimens are placed for cryogenic storage, and accordingly may be referred to as the cryogenic storage chamber (150). Preferably the inner tank passage is in the form of a hole in one of the inner tank walls, most preferably the inner tank top wall (162). The hole may be of any shape with the preferred shape being a circular shape. Other shapes may include square, rectangular, ovular, and hexagonal.

The outer tank (200) may be made of at least one outer tank wall (250). The preferred configuration of the outer tank is a closed cylinder comprising an outer tank top wall (252), an outer tank bottom wall (256), and an outer tank sidewall (254) spanning the distance between the outer tank top wall and the outer tank bottom wall. However, other configurations such as a cube, a sphere, or a spheroid are contemplated. The outer tank walls are preferably joined together in a permanent sealed fashion such as by welding or by manufacturing the outer tank walls of a single integral piece of material.

The outer tank (200) has an outer tank first end (210) proximate to the outer tank top wall (252) and an outer tank second end (220) proximate to the outer tank bottom wall (256). The outer tank first end is opposite the outer tank second end. The outer tank also has an outer tank diameter (230), which may also be referred to as an outer tank width in embodiments where a cross-sectional profile of the outer tank takes a non-circular configuration.

The outer tank (200) also has an outer tank passage (240), which allows access to the interior of the outer tank. Preferably, the outer tank passage is in the form of a hole in one of the outer tank walls, most preferably the outer tank top wall (252). The hole may be of any shape with the preferred shape being a circular shape. Other shapes may include square, rectangular, ovular, and hexagonal. Preferably, the hole for the outer tank passage will be sized and shaped similar or identical to the size and shape of the hole for the inner tank passage (140).

The outer tank (200) is larger than the inner tank (100). That is to say that the interior dimensions of the outer tank are greater than the exterior dimensions of the inner tank. As the outer tank is larger than the inner tank, a void is formed between the inner tank and the outer tank as shown in FIG. 1. In operation, this void is subjected to vacuum conditions to limit or reduce heat transmission into the inner tank and its cryogenic storage chamber (150).

The inner neck (300) may be made of at least one inner neck wall having an inner neck inner surface (330) and an inner neck outer surface (340). Preferably, the inner neck will be sized and shaped similar or identical to the size and shape of the holes for the inner tank passage (140) and the outer tank passage (240). That is to say that, when the hole for the inner tank passage is a circular hole having an approximately fifty centimeter diameter, and the outer tank passage is a circular hole having an approximately fifty centimeter diameter, the inner neck will preferably be in the form of an open ended cylinder having an inside diameter of approximately fifty centimeters.

The inner neck (300) has an inner neck first end (310) and an inner neck second end (320) opposite the inner neck first end. Once installed in the cryogenic storage container (10), the inner neck first end will be oriented in the direction of the outer tank first end (210) while the inner neck second end may be oriented in the direction of the outer tank second end (220).

The outer neck (400) may be made of at least one outer neck wall having an outer neck inner surface (430) and an outer neck outer surface (440). Preferably, the outer neck will be sized and shaped to be slightly larger than the inner neck (300). That is to say that, when the inner neck is an open ended cylinder having an outside diameter of fifty-two centimeters, the outer neck will preferably be in the form of an open ended cylinder having an inside diameter slightly greater than fifty-two centimeters. In this context, slightly greater than means at least 2 mm greater than with at least 5 mm greater than being more preferred, and at least 10 mm greater than being most preferred. There is no particular outer limit for the size difference between the outer neck and the inner neck with the exception that the outer neck and the inner neck should be sized to allow the outer neck and the inner neck to fit within the interior of the outer tank (200).

The outer neck (400) has an outer neck first end (410) and an outer neck second end (420) opposite the outer neck first end. Once installed in the cryogenic storage container (10), the outer neck first end will be oriented in the direction of the inner neck first end (310) while the outer neck second end may be oriented in the direction of the inner neck second end (320).

The ring (500) may be made of a rigid material having a ring inner surface (510) and a ring outer surface (520). Preferably, the ring will be sized and shaped to coincide with the size and shape of the inner neck (300) and the outer neck (400). That is to say that the ring has an inside dimension which is slightly greater than the outside dimension of the inner neck, and an outside dimension which is slightly less than the inside dimension of the outer neck. In this context, slightly greater than means no more than 5 mm greater than with no more than 3 mm greater than being more preferred, no more than 2 mm greater than being still more preferred, and no more than 1 mm greater than being most preferred. In this context, slightly less than means no more than 5 mm less than with no more than 3 mm less than being more preferred, no more than 2 mm less than being still more preferred, and no more than 1 mm less than being most preferred.

The ring (500) may be connected to the inner neck (300) and the outer neck (400) using a number of techniques. One preferred technique involves first cooling the ring to shrink the outside dimension of the ring by at least 0.5 %, then inserting the ring into the inside dimension of the outer neck and allowing the ring to return to room temperature. Next, the ring may be heated to expand the inside dimension of the ring by at least 0.5 %, following which the inner neck may be inserted into the inner dimension of the ring which is then allowed to return to room temperature. Doing so creates a friction fit between the ring outside dimension and the outer neck inside dimension, as well as a friction fit between the ring inside dimension and the inner neck outside dimension. This friction fit may be assisted - in some embodiments - by an adhesive such as a two-part epoxy applied to the surfaces prior to or after the friction fit is created.

The ring (500) may be connected to the inner neck (300). The connection between the ring and the inner neck may occur at an interface between the ring inner surface (510) and the inner neck outer surface (340) at the inner neck second end (320). The connection between the ring (500) and the inner neck (300) may take many forms. Non-limiting examples of such connections may include a friction fit (as described herein), an adhesive connection at the interface between the ring inner surface (510) and the inner neck outer surface (340) at the inner neck second end (320), a welded interface between the ring inner surface and the inner neck outer surface at the inner neck second end, at least one fastener - such as a nut and bolt, a screw, a rivet, or a clamp - which connects the ring to the inner neck outer surface at the inner neck second end, and combinations thereof.

When the connection is an adhesive connection, a bond will be formed between the inner neck outer surface (340) and the ring inner surface (510). The bond is preferably an adhesion bond in which an adhesive is applied at an interface between the inner neck inner surface and the ring inner surface. Preferred adhesives will exhibit high bond strength to dissimilar materials, high viscosity, and high shear strength. It is also preferred that the adhesive be impervious to cryogenic temperatures (i.e - the adhesive will not become brittle, crack, flake, or disintegrate at cryogenic temperatures). Examples of such adhesives may include epoxies with one preferred epoxy being Lord^{®} 3170-A/3170-B Epoxy available from LORD Corporation, Cary, N. Carolina, U.S.A.

The outer neck (400) at the outer neck first end (410) may be connected to the outer tank (200). Preferably, the outer neck at the outer neck first end will be connected to the outer tank at the outer tank passage (240). The connection between the outer neck (400) at the outer neck first end (410) and the outer tank (200) may take many forms. Non-limiting examples of such connections may include a friction fit (as described herein), an adhesive connection at an interface between the outer neck first end and the outer tank at the outer tank passage (240), a welded interface between the outer neck first end and the outer tank at the outer tank passage, at least one fastener - such as a nut and bolt, a screw, a rivet, or a clamp - which connects the outer neck first end to the outer tank at the outer tank passage, and combinations thereof.

One preferred embodiment includes the outer tank passage (240) comprising a second flange. When present, the second flange may extend from an interior surface or exterior surface of the outer tank (200). The outer neck outer surface (440) at the outer neck first end (410) may then be bonded to the second flange, although in certain embodiments it may be that the outer neck inner surface (430) at the outer neck first end may be bonded to the second flange. The bond is preferably an adhesion bond in which an adhesive is applied at an interface between the outer neck outer surface (or the outer neck inner surface) and the second flange. Preferred adhesives will exhibit high bond strength to dissimilar materials, high viscosity, and high shear strength. It is also preferred that the adhesive be impervious to cryogenic temperatures. Examples of such adhesives may include epoxies with one preferred epoxy being Lord^{®} 3170-A/3170-B Epoxy available from LORD Corporation, Cary, N. Carolina, U.S.A. In some embodiments the bond between outer neck outer surface (or the outer neck inner surface) and the second flange may be in the form of, or assisted by, use of one or more fasteners such as a bolt and nut, a screw, a rivet, a clamp, or the like.

The outer neck (400) at the outer neck second end (420) may be connected to the inner tank (100). Preferably, the outer neck at the outer neck second end will be connected to the inner tank at the inner tank passage (140). The connection between the outer neck (400) at the outer neck second end (420) and the inner tank (100) may take many forms. Non-limiting examples of such connections may include a friction fit (as described herein), an adhesive connection at an interface between the outer neck second end and the inner tank at the inner tank passage (140), a welded interface between the outer neck second end and the inner tank at the inner tank passage, at least one fastener - such as a nut and bolt, a screw, a rivet, or a clamp - which connects the outer neck second end to the inner tank at the inner tank passage, and combinations thereof.

One preferred embodiment includes the inner tank passage (140) comprising a first flange. When present, the first flange may extend from an interior surface or exterior surface of the inner tank (100). The outer neck outer surface (440) at the outer neck second end (420) may then be bonded to the first flange, although in certain embodiments it may be that the outer neck inner surface (430) at the outer neck second end may be bonded to the first flange. The bond is preferably an adhesion bond in which an adhesive is applied at an interface between the outer neck outer surface (or the outer neck inner surface) and the first flange. Preferred adhesives will exhibit high bond strength to dissimilar materials, high viscosity, and high shear strength. It is also preferred that the adhesive be impervious to cryogenic temperatures. Examples of such adhesives may include epoxies with one preferred epoxy being Lord^{®} 3170-A/3170-B Epoxy available from LORD Corporation, Cary, N. Carolina, U.S.A. In some embodiments the bond between the outer neck outer surface (or the outer neck inner surface) and the second flange may be in the form of, or assisted by, use of one or more fasteners such as a bolt and nut, a screw, a rivet, a clamp, or the like.

The ring (500) may be connected to the outer neck (400). The connection between the ring and the outer neck may occur at an interface between the ring outer surface (520) and the outer neck inner surface (430) at the outer neck second end (420). The connection between the ring (500) and the outer neck (400) may take many forms. Non-limiting examples of such connections may include a friction fit (as described herein), an adhesive connection at the interface between the ring outer surface (520) and the outer neck inner surface (430) at the outer neck second end (420), a welded interface between the ring outer surface and the outer neck inner surface at the outer neck second end, at least one fastener - such as a nut and bolt, a screw, a rivet, or a clamp - which connects the outer neck at the outer neck second end to the ring, and combinations thereof.

Once assembled, a gap will exist between the outer neck (400) and the inner neck (300) throughout the length of the inner neck and outer neck which is not connected to the ring (500). This gap will preferably be at least 2 mm in width with at least 5 mm in width being preferred, and at least 10 mm in width being more preferred. There is no particular outer limit for the size of the gap with the exception that the gap should be sized so that the outer neck and the inner neck may fit within the interior of the outer tank (200). This gap may then be subjected to vacuum conditions to limit or reduce heat transmission into the inner tank and its cryogenic storage chamber (150).

The outer neck (400) will have an outer neck outside diameter (450). In some embodiments, the outer neck outside diameter may be slightly smaller than the inner tank diameter (130) as shown in FIG. 1. By slightly smaller than it is meant that the outer neck outside diameter is at least 5 mm smaller than the inner tank diameter with at least 10 mm smaller than the inner tank diameter being preferred, and at least 20 mm smaller than the inner tank diameter being more preferred.

FIG. 1 also shows a hydrophobic absorbent material (180). An example of a hydrophobic absorbent material is preferably lightweight, hydrophobic, and has a high rate of absorptivity of liquid nitrogen (amount of liquid nitrogen absorbed per unit volume). One preferred hydrophobic absorbent material is Cryogel^{®} available from Aspen Aerogels, Inc. of Northborough, Massachusetts, U.S.A. As shown in FIG. 1, the hydrophobic absorbent material may surround at least a portion of the inner tank (100). Preferably, the hydrophobic absorbent material surrounds all or substantially all of an inner tank sidewall (164). In some embodiments, the hydrophobic absorbent material may also surround at least a portion of the outer neck (400). As shown in FIG. 1, the hydrophobic absorbent material may surround all or substantially all of the outer neck outer surface (440).

The cryogenic storage container (10) also has a lid assembly (600). As shown, the lid assembly may comprise a cover (610) and an insulation member (620). The cover will have a cover top surface (612) and a cover bottom surface (614) opposite the cover top surface. The cover top surface and cover bottom surface referring to the orientation of the opposing surfaces when the cover is installed with the cover bottom surface facing inwardly towards the cryogenic storage chamber (150).

The insulation member (620) will be attached to and extend from the cover bottom surface (614). Preferably the insulation member is attached to the cover bottom surface by an adhesive, although embodiments may exist in which the insulation member is attached to the cover bottom surface by at least one fastener such as a bolt and nut, a screw, a rivet, or a clamp. Preferably, the insulation member will have an insulation member length (625). The insulation member length may be approximately equal to or equal to a length of the inner neck (300) measured from the inner neck first end (310) to the inner neck second end (320).

The lid assembly (600) may be connected to the outer tank (200) in a variety of ways known in the art, and those yet to be invented. One of which involves inserting the insulation member (620) into the hollow interior of the inner neck (300) and sealing the cover (610) to the outer surface of the outer tank using a clamp, a latch, or a similar device. In some such embodiments, a flange may extend from the outer surface of the outer tank and may provide a surface against which the cover is sealed. In other embodiments a portion of the cover may be connected to the outer surface of the outer tank using a hinge, and the cover may be sealed to the outer surface of the outer tank using one or more clamps, latches, or similar devices.

The inner tank and the outer tank may each individually be constructed of any number of rigid metal materials. Examples of such rigid metal materials include steel, stainless steel, and aluminum.

The inner neck and the outer neck may each individually be constructed of a composite material. Preferably, the composite material is a fiberglass material. The fiberglass material may be a high-pressure fiberglass laminate. One preferred example of such a fiberglass material is a Garolite G-10/FR4 fiberglass-epoxy laminate material available from American Micro Industries, Chambersburg, Pennsylvania, U.S.A.

The ring may be constructed of any number of rigid metal materials. Examples of such rigid metal materials include aluminum, steel, titanium, and alloys thereof. One preferred rigid metal material is an aluminum material which may be aluminum or an aluminum alloy.

The components of the lid assembly may be constructed of varying materials. For example, the cover may be constructed of a variety of rigid materials including plastics, metals, and the like. The insulation member may be constructed of a material which is lightweight, hydrophobic, has low thermal conductivity, and is stable at cryogenic temperatures. Examples of preferred materials for the insulation member include expanded polystyrene (EPS) foam and polyurethane foam.

The unique neck assembly described above reduces temperature increases in the cryogenic storage chamber during transportation of the cryogenic storage container. Specifically, the dual neck configuration with an inner neck and outer neck allows for an increased amount of insulation and absorbent material inside the cryogenic storage container without increasing the overall size of the container. The dual neck configuration itself provides additional absorbent material in the neck area. Additionally, the outside diameter of the outer neck may be made to match the outside diameter of the inner tank, thereby allowing the hydrophobic absorbent material used for insulation around the inner tank wall to extend around the outer surface of the outer neck.

### Data Logging System

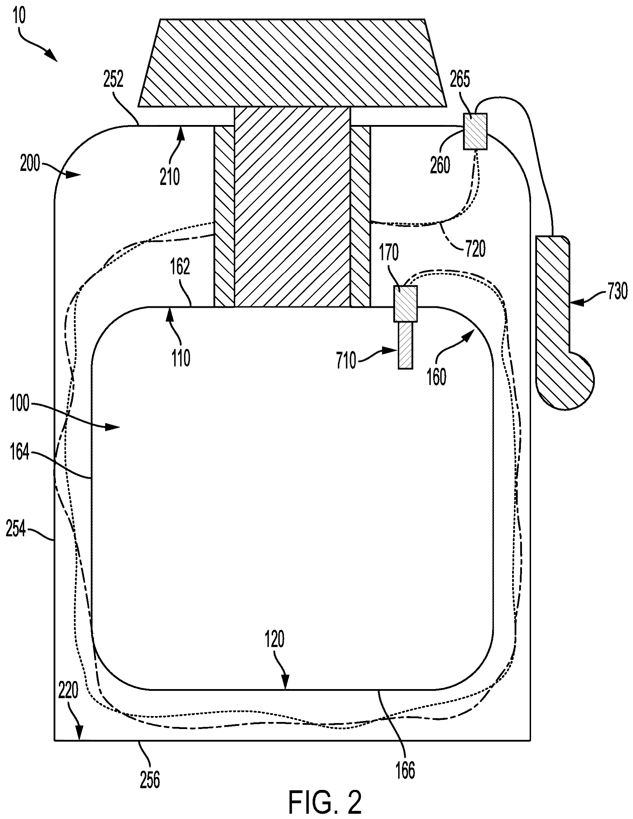

FIG. 2 shows a cross-section view of a data logging system for a cryogenic storage container (10). As shown in FIG. 2, the cryogenic storage container may comprise an inner tank (100) and an outer tank (200). The inner tank and outer tank may be of any variety described herein with reference to the neck assembly for a cryogenic storage container. The cryogenic storage container may also comprise a data acquisition assembly. As shown in FIG. 2, the data acquisition assembly may comprise a temperature sensor (710), at least one wire (720), and a data logging and display device (730).

FIG. 2 also shows an inner tank wall (160) of the inner tank (100) comprising at least one inner tank port (170). The inner tank port(s) are also sometimes referred to in the industry as a thermowell. The at least one inner tank port may be in the form of a through hole passing through the inner tank wall through which a device which provides information regarding conditions within the cryogenic storage chamber (150) passes. The inner tank wall which comprises the at least one inner tank port may be any one of the inner tank top wall (162), the inner tank sidewall (164), or the inner tank bottom wall (166). Preferably the inner tank wall which comprises the at least one inner tank port is the inner tank top wall. When the inner tank wall which comprises the at least one inner tank port is the inner tank sidewall, it is preferred that the at least one inner tank port is located at a top end of the inner tank sidewall with the top end of the inner tank sidewall corresponding to the inner tank first end (110).

Also shown in FIG. 2 is an outer tank wall (250) of the outer tank (200) comprising at least one outer tank port (260). The at least one outer tank port may be in the form of a through hole passing through the outer tank wall through which component(s) of a device which provides information regarding conditions within the cryogenic storage chamber (150) passes. The outer tank wall which comprises the at least one outer tank port may be any one of the outer tank top wall (252), the outer tank sidewall (254), or the outer tank bottom wall (256). Preferably the outer tank wall which comprises the at least one outer tank port is the outer tank top wall. When the outer tank wall which comprises the at least one outer tank port is the outer tank sidewall, it is preferred that the at least one outer tank port is located at a top end of the outer tank sidewall with the top end of the outer tank sidewall corresponding to the outer tank first end (210).

The device which provides information regarding conditions within the cryogenic storage chamber (150) may be the temperature sensor (710). An example of a temperature sensor is a platinum resistance temperature detector (RTD). The temperature sensor may be connected to the inner tank (100) at the inner tank port (170). As shown in FIG. 2, the temperature sensor passes through the inner tank port with at least a portion of the temperature sensor disposed within the cryogenic storage chamber. Preferably the temperature sensor and the inner tank port will be sized and shaped similarly such that the assembly of the temperature sensor and the inner tank port produces a sealing effect. In certain embodiments the assembly of the temperature sensor and the inner tank port may include a port sealing member, such as a gasket, an O-ring, a bushing, or the like disposed between an exterior surface of the temperature sensor and an interior surface of the inner tank port.

The data logging and display device (730) may be located external to the outer tank (200). An example of a data logging and display device is a Libero CE Multi-Level and Multi-Use PDF Logger available from Elpro-Buchs AG of Buchs SG, Switzerland. The data logging and display device may be located in any position external to the outer tank. In some embodiments the data logging and display device may be connected to an exterior surface of the outer tank by a fastener such as a bolt, a screw, a rivet, a clamp, or the like. The exterior surface to which the data logging and display device may be connected may be selected from the group consisting of an exterior surface of the outer tank top wall (252), an exterior surface of the outer tank sidewall (254), and an exterior surface of the outer tank bottom wall (256). The preferred exterior surface to which the data logging and display device may be connected is the outer tank sidewall.

The at least one wire (720) may electrically connect at a first end to the temperature sensor (710), extend through the void between the inner tank (100) and the outer tank (200), through the outer tank port (260), and electrically connect at a second end to the data logging and display device (730) as shown in FIG. 2. In some embodiments, the outer tank port will comprise a sealed vacuum feedthru device (265) through which the at least one wire passes. The sealed vacuum feedthru device allows for the wires to pass from the interior of the outer tank to the exterior of the outer tank while also forming a hermetically sealed vacuum chamber between the inner tank and the outer tank. One example of a sealed vacuum feedthru device is a PFT2 Series Vacuum/Pressure Feedthrough available from OMEGA Engineering Inc., of Manchester, United Kingdom. The electrical connection between the temperature sensor, the wire, and the data logging and display device allows the temperature sensor to electrically convey information about temperature conditions within the cryogenic storage chamber (150) through the wire and to the data logging and display device where it can be displayed on an output screen to an observer.

The at least one wire (720) will have a wire length and a wire gauge. The wire gauge refers to the measurement of the wire's diameter and determines the amount of electric current that the wire can safely carry. Accordingly, there will be a ratio between the wire length and the wire gauge. The ratio between wire length and wire gauge may be at least 500:1. Alternatively, the ratio between wire length and wire gauge may be selected from the group consisting of at least 500:1, at least 5,000:1, at least 50,000:1, at least 500,000:1, at least 850,000:1, and at least 1,000,000:1.

In addition to, or instead of a temperature sensor, the data logging system may include a cryogen level sensor. The cryogen level sensor may be connected to the inner tank port in embodiments where the data logging system does not include a temperature sensor, or to a second inner tank port in embodiments where the data logging system does include a temperature sensor. The cryogen level sensor may be connected to the data logging and display device, which may include a secondary data logging and display device for cryogen level display in embodiments where the data logging system also includes a temperature sensor. The cryogen level sensor may be connected to the data logging and display device by passing through the sealed vacuum feedthru device connected to the outer tank port in embodiments where the data logging system does not include a temperature sensor, or to a second sealed vacuum feedthru device connected to a second outer tank port in embodiments where the data logging system does include a temperature sensor. A preferred cyrogen level sensor is a Series 616W differential pressure transmitter available from Dwyer Instruments, Inc., Michigan City, Indiana, U.S.A.

The data logging system described above allows for more accurate and continuous monitoring of the temperature in the cryogenic storage chamber of the cryogenic storage container. Unlike prior art solutions in which the temperature sensor is located in the lid, the location of the temperature sensor in the inner tank wall allows for monitoring of the temperature in the cryogenic storage chamber where products are located. Additionally, locating the temperature sensor in the inner tank wall provides the user more accurate information about the temperature over time without the temperature sensor being exposed to atmosphere conditions when the lid is removed.

### Lid Sealing Device

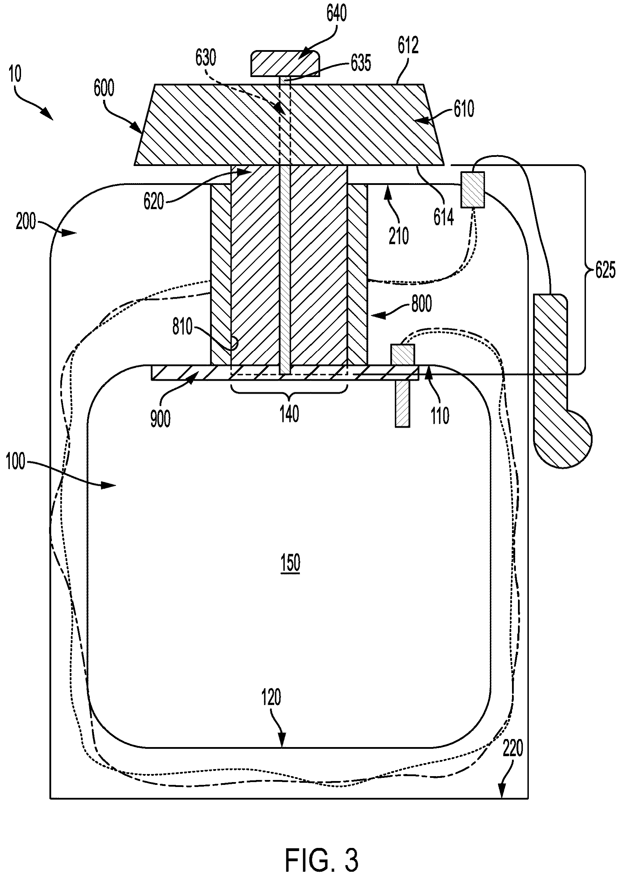

FIG. 3 shows a cross-section view of a lid sealing device for a cryogenic storage container (10). As shown in FIG. 3, the cryogenic storage container may comprise an inner tank (100) and an outer tank (200). The inner tank and outer tank may be of any variety described herein with reference to the neck assembly for a cryogenic storage container. The cryogenic storage container may also comprise a lid assembly (600). The lid assembly may be of any variety described herein with reference to the neck assembly for a cryogenic storage container. The cryogenic storage container may also comprise a neck (800) having a neck inner surface (810 as shown in FIG. 3). Further, the cryogenic storage container may comprise a sealing member (900) having a sealing member perimeter surface and a sealing member inner surface.

As shown in FIG. 3, the lid assembly (600) may also comprise a passage (630). The passage may extend through the insulation member and the cover (610). The lid assembly may also comprise a pressure relief valve (640). While the pressure relief valve may be connected to the lid assembly at any point along the length of the passage, in preferred embodiments the pressure relief valve will be attached at a passage first end (635) which is external to the cover top surface (612). Preferably, the pressure relief valve will be configured to open at a pressure of at least 5 psi.

In some embodiments, the pressure relief valve may include a flow meter. When used the flow meter may be used to measure the volume of gaseous state cryogen exiting the cryogenic storage container through the pressure relief valve. When present, the flow meter may be electronically connected to a data logging and display device - such as the data logging and display device (730) shown in FIG. 2 - to calculate and display both the volume of gaseous state cryogen exiting the cryogenic storage container and the estimated volume of liquid cryogen remaining in the cryogenic storage chamber based on the amount of gaseous state cryogen which has exited the cryogenic storage chamber over time.

FIG. 3 also shows the neck (800) extending between the inner tank passage (140) and the outer tank passage (240). The neck may be attached to the inner tank passage using any of the mechanisms described herein with reference to the inner neck (300) attaching to the inner tank passage in the neck assembly for a cryogenic storage container. Similarly, the neck may be attached to the outer tank passage using any of the mechanisms described herein with reference to the inner neck attaching to the outer tank passage in the neck assembly for a cryogenic storage container. In some embodiments, the neck will include an inner neck and an outer neck (400) as described herein, although the lid sealing device may also be used in applications having only a single neck.

When the lid assembly (600) is in a closed position the insulation member is configured to be at least partially disposed within the neck and mated with the sealing member inner surface. That is to say that the insulation member has a cross-sectional profile size and shape similar to the size and shape of the sealing member inner surface. For instance, if the sealing member inner surface is in the shape of a circle having a diameter of approximately fifty centimeters, then the cross-sectional profile of the insulation member will also be in the shape of a circle having a diameter of approximately fifty centimeters. This allows the exterior surface of the insulation member to interface with the sealing member inner surface.

In some embodiments the sealing member perimeter surface may be connected to the neck inner surface (810) such that the sealing member remains in place when the lid assembly (600) is removed from within the neck (800). The sealing member perimeter surface may be connected to the neck inner surface by a number of connection mechanisms. The preferred mechanism is an adhesive which attaches the sealing member perimeter surface to the neck inner surface. In some embodiments the adhesive may provide an additional sealing effect by filling any gaps which may exist between the sealing member perimeter surface and the neck inner surface. In certain embodiments, the connection mechanism may be, or may be assisted by, one or more fasteners such as a screw, a bolt, or a rivet. In other embodiments, the connection mechanism may be, or may be assisted by, a friction fit between the sealing member perimeter surface and the neck inner surface.

When the lid assembly (600) is installed within the neck (800), a portion of the outer perimeter of the insulation member (620) interfaces with sealing member inner surface. The interface between the insulation member and the sealing member inner surface, along with the connection between the sealing member perimeter surface and the neck inner surface (810) creates an air-tight seal between the insulation member, the sealing member, and the neck when the lid assembly is installed within the neck.

In other embodiments, the sealing member inner surface may be connected to the insulation member (620) such that the sealing member can be removed from within the neck (800) with the lid assembly (600). The sealing member inner surface may be connected to the insulation member by a number of connection mechanisms. The preferred connection mechanism is an adhesive which attaches the sealing member inner surface to the insulation member. In some embodiments the adhesive may provide an additional sealing effect by filling any gaps which may exist between the sealing member inner surface and the insulation member. In certain embodiments, the connection mechanism may be, or may be assisted by, one or more fasteners such as a screw, a bolt, a rivet, or a clamp. In other embodiments, the connection mechanism may be, or may be assisted by a friction fit between the sealing member inner surface and the insulation member.

When the lid assembly (600) is installed within the neck (800), the sealing member perimeter surface interfaces with a portion of the neck inner surface (810). The interface between the sealing member perimeter surface and the neck inner surface, along with the connection between the sealing member inner surface and the insulation member (620) creates an air-tight seal between the insulation member, the sealing member, and the neck when the lid assembly is installed within the neck.

In still other embodiments, the sealing member (900) may be located within the cryogenic storage chamber (150). In such embodiments, the sealing member may be connected to the inner tank wall (160) at the inner tank passage (140). The connection between the sealing member and the inner tank wall may include any number of connection mechanisms. The preferred connection mechanism is an adhesive which attaches the sealing member to the inner tank wall. In certain embodiments, the connection mechanism may be, or may be assisted by, one or more fasteners such as a screw, a bolt, a rivet, or a clamp.

In embodiments where the sealing member (900) is located within the cryogenic storage chamber (150), the sealing member inner surface will have dimensions which are smaller than the dimensions of the inner tank passage (140). When the lid assembly (600) is installed within the neck (800), a portion of the insulation member (620) extends past the inner tank passage. When this occurs, the sealing member inner surface interfaces with a portion of the insulation member to create an air-tight seal between the insulation member and the sealing member when the lid assembly is installed within the neck.

In some embodiments, the sealing member (900) may comprise a pair of opposing facing sealing members. Each opposing facing sealing member may comprise a lip with the lip of the top sealing member facing opposite the lip of the bottom sealing member. The opposing facing sealing members may be connected to any of the neck inner surface (810), the insulation member (620), or the inner tank wall (160) using any of the connection mechanisms described herein.

The sealing member (900) is preferably constructed of a hydrophobic polymer material. One preferred hydrophobic polymer material is polytetrafluoroethylene (PTFE).

The unique lid sealing device described above reduces or eliminates the likelihood of cryogen leakage during transport. By sealing the lid assembly to the sealing member cryogen vapors cannot pour out of the cryogenic storage container when it is in a non-upright position. Accordingly, the cryogenic storage container may be shipped in non-upright positions without the risk of cryogen loss through the venting system.

### Embodiments

One preferred cryogenic storage container will have the neck assembly described herein.

Another preferred cryogenic storage container will have the data logging system described herein.

Yet another preferred cryogenic storage container will have the lid sealing device described herein.

Still another preferred cryogenic storage container will have the neck assembly and the data logging system described herein.

Another preferred cryogenic storage container will have the neck assembly and the lid sealing device described herein.

Yet another preferred cryogenic storage container will have the data logging system and the lid sealing device described herein.

Still another preferred cryogenic storage container will have the neck assembly, the data logging system, and the lid sealing device described herein.

The following numbered statements define additional novel and inventive combinations of features:
1. A cryogenic storage container (10) comprising:
   an inner tank (100) having an inner tank first end (110), an inner tank second end (120) opposite the inner tank first end, an inner tank diameter (130), and an inner tank passage (140) to a cryogenic storage chamber (150);
   an outer tank (200) having an outer tank first end (210), an outer tank second end (220) opposite the outer tank first end, an outer tank diameter (230), and an outer tank passage (240);
   an inner neck (300) having an inner neck first end (310), an inner neck second end (320) opposite the inner neck first end, an inner neck inner surface (330), and an inner neck outer surface (340);
   an outer neck (400) having an outer neck first end (410), an outer neck second end (420) opposite the outer neck first end, an outer neck inner surface (430), and an outer neck outer surface (440);
   a ring (500) having a ring inner surface (510) and a ring outer surface (520); and
   a lid assembly (600) comprising a cover (610) having a cover top surface (612) and a cover bottom surface (614), and an insulation member (620) attached to and extending from the cover bottom surface; and

   wherein the outer neck outer surface or the outer neck inner surface at the outer neck first end is connected to the outer tank at the outer tank passage;
   the outer neck outer surface or the outer neck inner surface at the outer neck second end is connected to the inner tank at the inner tank passage.
   the ring inner surface is connected to the inner neck outer surface at the inner neck second end;
   the ring outer surface is connected to the outer neck inner surface at the outer neck second end; and
   the outer neck and the inner neck are configured such that a gap exists between the outer neck inner surface and the inner neck outer surface, said gap being at least 2 mm in width.
2. The cryogenic storage container as recited in statement 1, wherein the inner tank passage comprises a first flange extending from the inner tank, and the outer neck outer surface or the outer neck inner surface at the outer neck second end is connected to the inner tank at the inner tank passage by bonding the outer neck outer surface or the outer neck inner surface at the outer neck second end to the first flange.
3. The cryogenic storage container as recited in any of statements 1 to 2, wherein the outer tank passage comprises a second flange extending from the outer tank, and the outer neck outer surface or the outer neck inner surface at the outer neck first end is connected to the outer tank at the outer tank passage by bonding the outer neck outer surface or the outer neck inner surface at the outer neck first end to the second flange.
4. The cryogenic storage container as recited in any of statements 1 to 3, wherein the inner neck is made of a first fiberglass material.
5. The cryogenic storage container as recited in statement 4, wherein the first fiberglass material is a Garolite G-10/FR4 fiberglass-epoxy laminate material.
6. The cryogenic storage container as recited in any of statements 1 to 5, wherein the outer neck is made of a second fiberglass material.
7. The cryogenic storage container as recited in statement 6, wherein the second fiberglass material is a Garolite G-10/FR4 fiberglass-epoxy laminate material.
8. The cryogenic storage container as recited in any of statements 1 to 7, wherein the ring is made of an aluminum material.
9. The cryogenic storage container as recited in any of statements 1 to 8, wherein at least a portion of the inner tank is surrounded by a first hydrophobic absorbent material (180).
10. The cryogenic storage container as recited in statement 9, wherein the first hydrophobic absorbent material is Cryogel^{®}.
11. The cryogenic storage container as recited in any of statements 9 to 10, wherein at least a portion of the outer neck is surrounded by the first hydrophobic absorbent material.
12. The cryogenic storage container as recited in any of statements 1 to 11, wherein the outer neck has an outer neck outside diameter (450), and the outer neck outside diameter is slightly less than the inner tank diameter.
13. A cryogenic storage container (10) comprising:
   an inner tank (100) comprising at least one inner tank wall (160) at least partially surrounding a cryogenic storage chamber (150), said inner tank wall comprising at least one inner tank port (170);
   an outer tank (200) comprising at least one outer tank wall (250), said outer tank wall comprising at least one outer tank port (260); and
   a data acquisition assembly comprising a temperature sensor (710), at least one wire (720), and a data logging and display device (730); and

   wherein the temperature sensor is connected to the inner tank at the inner tank port;
   the data logging and display device is located external to the outer tank;
   the at least one wire electrically connects at a first end to the temperature sensor, extends through a void between the inner tank and the outer tank, through the outer tank port, and electrically connects at a second end to the data logging and display device; and
   the at least one wire has a wire length, a wire gauge, and a ratio between wire length and wire gauge of at least 500:1.
14. The cryogenic storage container as recited in statement 13, wherein the outer tank port comprises a sealed vacuum feedthru device (265).
15. The cryogenic storage container as recited in any of statements 13 to 14, wherein the outer tank wall comprising the at least one outer tank port is an outer tank top wall (252).
16. The cryogenic storage container as recited in any of statements 13 to 14, wherein the outer tank wall comprising the at least one outer tank port is an outer tank sidewall (254), and the at least one outer tank port is located at a top end of the outer tank sidewall.
17. The cryogenic storage container as recited in any of statements 13 to 16, wherein the inner tank wall comprising the at least one inner tank port is an inner tank top wall (162).
18. The cryogenic storage container as recited in any of statements 13 to 16, wherein the inner tank wall comprising the at least one inner tank port is an inner tank sidewall (164), and the at least one inner tank port is located at a top end of the inner tank sidewall.
19. The cryogenic storage container as recited in any of statements 13 to 18, wherein the ratio between wire length and wire gauge is selected from the group consisting of at least 500:1, at least 5,000:1, at least 50,000:1, at least 500,000:1, at least 850,000:1, and at least 1,000,000:1.

## Claims

1. A cryogenic storage container (10) comprising:
an inner tank (100) comprising at least one inner tank wall (160) having an inner tank passage (140) to a cryogenic storage chamber (150) disposed in the inner tank wall;
an outer tank (200) comprising at least one outer tank wall (250) having an outer tank passage (240) disposed in the outer tank wall;
a lid assembly (600) comprising a cover (610) having a cover top surface (612), a cover bottom surface (620), an insulation member (620) attached to and extending from the cover bottom surface, a passage (630) extending through the insulation member and the cover, and a pressure relief valve (640) attached at a passage first end (635) external to the cover top surface; a neck (800) having a neck inner surface (810); and
a sealing member (900) having a sealing member perimeter surface and a sealing member inner surface; and
wherein the neck extends between the inner tank passage and the outer tank passage;
the insulation member is configured to be at least partially disposed within the neck and mated with the sealing member inner surface when the lid assembly is in a closed position.

2. The cryogenic storage container of claim 1, wherein the sealing member perimeter surface is configured to mate with the neck inner surface when the lid assembly is in the closed position.

3. The cryogenic storage container of any of claims 1 to 2, wherein the sealing member perimeter surface is connected to the neck inner surface.

4. The cryogenic storage container of any of claims 1 to 2, wherein the sealing member inner surface is connected to the insulation member.

5. The cryogenic storage container of claim 1, wherein the sealing member is located within the cryogenic storage chamber and is connected to the inner tank wall at the inner tank passage.

6. The cryogenic storage container of any of claims 1 to 5, wherein the sealing member comprises a pair of opposing facing seals.

7. The cryogenic storage container of any of claims 1 to 6, wherein the sealing member is made of a hydrophobic polymer material.

8. The cryogenic storage container of claim 7, wherein the hydrophobic polymer material is polytetrafluoroethylene (PTFE).

9. The cryogenic storage container of any of claims 1 to 8, wherein the pressure relief valve is configured to open at a pressure of at least 5 psi.

10. The cryogenic storage container of any of claims 1 to 9, wherein the pressure relief valve further comprises a flow meter.

11. The cryogenic storage container of claim 10, wherein the flow meter is electronically connected to a data logging and display device.
